# EUROPEAN PATENT APPLICATION

(11) **EP 2 849 044 A1**
(43) Date of publication of application: **18.03.2015**
(21) Application number: 14181025.9
(22) Date of filing: 14.08.2014
(51) Int. Cl.: G06F 3/0488, G06F 17/21, G06F 17/27, G06F 3/0354, G06K 9/22, G06F 9/44, G06F 17/24

(54) **Electronic device and method for note-taking by handwriting on a touch screen**

(30) Priority: 13.09.2013 TW 102133130
(71) Applicant: Acer Incorporated, Taipei County 221 (TW)
(72) Inventor: Wang, Yu-Jing, 221 New Taipei City (TW)
(74) Representative: 2K Patentanwälte Blasberg Kewitz & Reichel

(57) **Abstract**

An electronic device and method for controlling the same are provided. The electronic device includes a touch-sensitive screen and a controller. The touch-sensitive screen receives a first touch-moving path and a second touch-moving path thereon, wherein at least a part of the first touch-moving path is highlighted by the second touch-moving path. The controller recognizes and stores the highlighted part of the first touch-moving path.

## Description

### Cross reference to related Applications

This application claims priority of Taiwan Patent Application Ser. No. 102133130, filed 2013/09/13, entitled ELECTRONIC DEVICE AND METHOD OF CONTROLLING THE SAME. The contents of this application are hereby incorporated by reference.

### BACKGROUND OF THE INVENTION

### Field of the Invention

The disclosure relates generally to electronic devices and methods of controlling the same and, more particularly, to electronic devices which facilitate fast and smooth note-taking by handwriting on a touch screen and transmit the contents of the notes to various applications in a highly intuitive and user-friendly manner.

### Description of the Related Art

Applications that allow a user to handwrite on his portable electronic device using a finger or stylus have become increasingly popular. On the portable electronic device, the user can write down various content, such as telephone numbers, e-mail accounts, names of people, items on a schedule, or the like. The written contents may include various types of information. Generally, further editing or rearrangement is performed on these handwritten notes before they are transmitted to different applications for further use.

Some electronic devices provide a handwriting input screen to facilitate note-taking by handwriting. For example, a "menu for handwriting tools" may be provided, wherein the menu includes handwriting tools or input options such as "drawing", "arithmetic formula", and "text". In the aforementioned electronic device, when a user is going to take a note, the user selects "drawing", "arithmetic formula", or "text" before performing the handwriting. Then the input handwritten contents are recognized according to the selected handwriting tools or input options. For example, when an arithmetic formula is to be input, the item "arithmetic formula" is selected from the menu before writing the arithmetic formula on the screen; and the corresponding input is then recognized using programs for recognizing arithmetic formula. Using this electronic device, the user selects "drawing", "arithmetic formula", or "text" before performing the handwriting. Accordingly, the handwriting action is interrupted by the menu selecting action.

Accordingly, there is a need for an electronic device which facilitates fast and smooth note-taking by handwriting on a touch screen and transmits the content of the note to various applications in a highly intuitive and user-friendly manner.

### Brief Summary of the Invention

Electronic devices and methods of controlling the same are provided.

In an embodiment of a method for controlling an electronic device, which is equipped with a touch-sensitive screen and a controller, the touch-sensitive screen receives a first touch-moving path on the touch-sensitive screen. The touch-sensitive screen then receives a second touch-moving path on the touch-sensitive screen, wherein at least a part of the first touch-moving path is highlighted by the second touch-moving path. In response to receiving the second touch-moving path, the controller recognizes and stores the highlighted part of the first touch-moving path.

An embodiment of an electronic device includes a touch-sensitive screen and a controller. The touch-sensitive screen includes a display and receives touch inputs (such as a touch-moving path). The touch-sensitive screen receives a first touch-moving path and a second touch-moving path on the touch-sensitive screen, wherein at least a part of the first touch-moving path is highlighted by the second touch-moving path. The controller recognizes and stores the highlighted part of the first touch-moving path.

The disclosed methods of controlling an electronic device and related operating systems may take the form of a program code embodied in a tangible media. When the program code is loaded into and executed by a machine, the machine becomes a device for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of an electronic device of the invention;
Fig. 2 is a flowchart of an embodiment of a method of controlling an electronic device;
Figs. 3A∼3E illustrate displays of an electronic device according to embodiments of the invention.

### Detailed Description of the Invention

The following description is the best-contemplated mode of carrying out the invention. This description is made for the purpose of illustrating the general principles of the invention and should not be taken in a limiting sense. The scope of the invention is determined by reference to the appended claims.

The present invention will be described with respect to particular embodiments and with reference to certain drawings, but the invention is not limited thereto. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Use of ordinal terms such as "first", "second", "third", etc., in the specification and claims to modify an element does not by itself connote any priority, precedence, or order of one element over another or the temporal order in which acts of a method are performed, but are used merely as labels to distinguish one element having a certain name from another element having the same name (but for use of the ordinal term) to distinguish these elements.

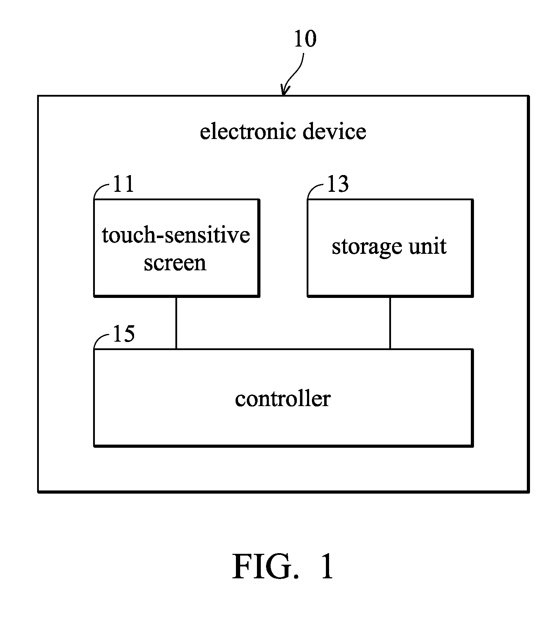

Fig. 1 is a schematic diagram illustrating an embodiment of an electronic device of the invention. According to an embodiment, an electronic device 10 can be a personal computer or a portable electronic device, such as a PDA (Personal Digital Assistant), a mobile phone, a smart phone, or a mobile Internet Device (MID).

The electronic device 10 includes a touch-sensitive screen 11, a storage unit 13, and a controller 15.

The touch-sensitive screen 11 has a touch-sensitive surface. The touch-sensitive screen 11 can detect touches and movements of a control tool, such as a stylus or a finger on the touch-sensitive surface. The touch-sensitive screen 11 can display related graphics, data, and interfaces. The touch-sensitive screen 11 receives input corresponding to user manipulation, and transmits the received input to the controller 15 for further processing.

The storage unit 13 stores personal data, settings and software of the electronic device 10. The personal data can be various user data or personal files such as an address book, a call list, received/sent messages, browser cookies, or the like.

The controller 15 executes a method of controlling an electronic device with a touch-sensitive screen of the invention. Related details are discussed below.

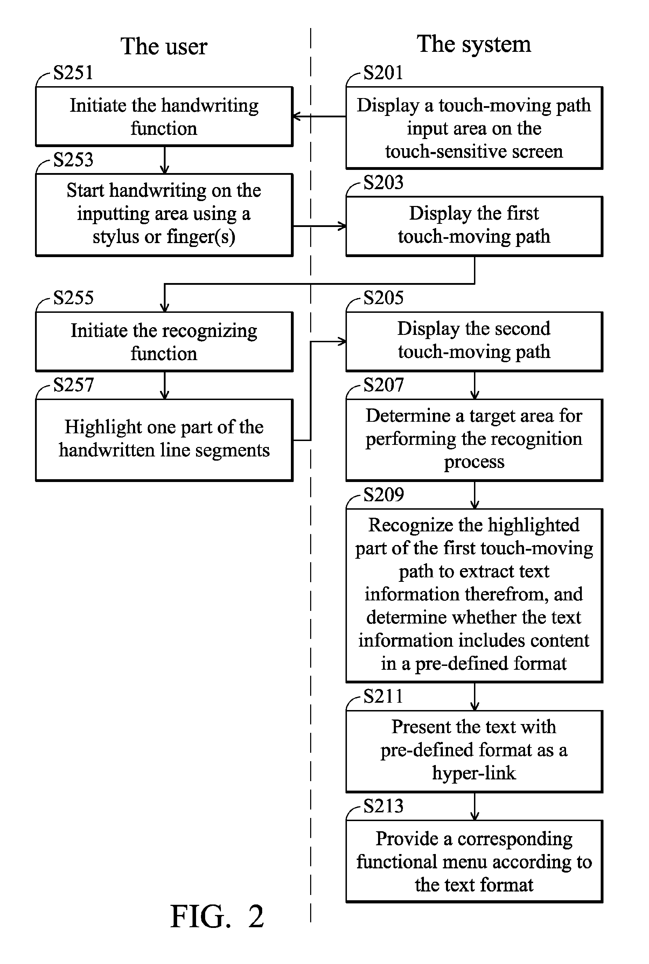

Fig. 2 is a flowchart of an embodiment of a method of controlling an electronic device. The method of controlling an electronic device can be used in an electronic device, including but not limited to a PDA (Personal Digital Assistant), a smartphone, a mobile phone, or the like. According to an embodiment, the electronic device is equipped with a touch-sensitive screen.

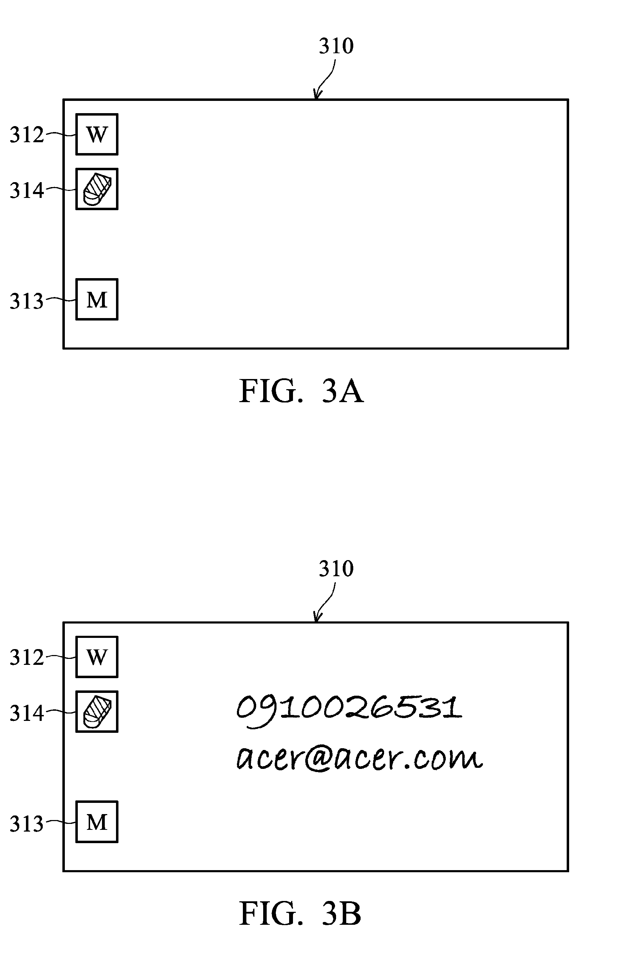

In addition, Figs. 3A∼3E illustrate displays of an electronic device generated in the process illustrated in Fig. 2. The displays illustrated in Figs. 3A∼3E are taken as examples, rather than limitations. It should be apparent that the invention is not limited to the examples, and the virtual buttons (soft keys) can be displayed in any design.

Referring to Fig. 2, steps performed by the user are shown on the left side of Fig. 2 and steps performed by the system (a portable electronic device) are shown on the right side of Fig. 2.

In step S201, a touch-moving path input area (or a handwriting area) is displayed on the touch-sensitive screen, and the user can input a touch-moving path on the touch-sensitive screen to leave an electronic message or to take a note. In addition, virtual button(s) can be provided on or near the handwriting area for switching the electronic device between an input mode and a highlight mode. In the input mode, the user handwrites on the touch-sensitive screen to input text, a drawing or the like. In the highlight mode, the user highlights part of the written or drawn content as a designated part for further recognition.

Fig. 3A illustrates an exemplary handwriting area according to an embodiment of the invention. Referring to Fig. 3A, the handwriting area 310 includes an inputting area 311, a handwriting button 312, an erase button 314, and a recognize button 313.

When the handwriting button 312 is activated (touched), a user can start handwriting on the inputting area 311 using a stylus or finger(s). When the erase button 314 is activated (touched), a user can erase a written line or character on the inputting area 311. When the recognize button 313 is activated, a user can highlight part of the written lines or characters that is to be recognized.

It should be apparent that the invention is not limited to this example, and the virtual buttons and inputting area can be displayed in any design. For example, instead of displaying and using the handwriting button 312 and the recognize button 313 on the handwriting area 310, a stylus with a hardware button can be used for activating the handwriting function and the recognizing function. For example, a stylus with a side button and a tip is used. In this case, the handwriting function is activated when a user uses the stylus to write on the handwriting area 310 without pushing the side button; and the recognizing function is activated when the user leaves marks on the handwriting area 310 while pushing (pressing) the side button.

In step S251, the user activates the handwriting button 312 to initiate the handwriting function.

In step S253, the user starts handwriting on the inputting area 311 using a stylus or finger(s). In addition, other buttons or menus can be provided on the handwriting area 310 to set visual features for displaying the written line segments, such as ink color, brush stroke, transparency, and stroke width for displaying the written line segments. It should be apparent that the visual features are not limited to this example, and the written line segments can be displayed in any design.

In step S203, the electronic device displays the handwritten line segments (hereinafter referred to as the first touch-moving path) according to the user's handwriting operation and the visual features settings. Because the handwritten line segments (hereinafter referred to as the first touch-moving path) have not been recognized yet, the original handwritten line segments are displayed.

Referring to Fig. 3B, a telephone number and an e-mail address is written by a user on the touch-sensitive screen.

In step S255, the recognize button 313 is activated (touched) by the user to initiate the recognizing function. Using the recognizing function, the user highlights at least one part of the handwritten line segments (first touch-moving path), and the electronic device performs the recognition process and other operation to the highlighted part.

In step S257, one part of the handwritten line segments (first touch-moving path) is highlighted by the user. In this example, the first touch-moving path corresponding to the telephone number is highlighted.

In step S205, a highlight line segment (hereinafter referred to as the second touch-moving path) is displayed according to the highlight operation performed in step S217. For the sake of operational convenience and visual effects, the first touch-moving path and the second touch-moving path are displayed with line segments with different visual features. For example, the visual features can be ink color, brush stroke, transparency, stroke width or the like.

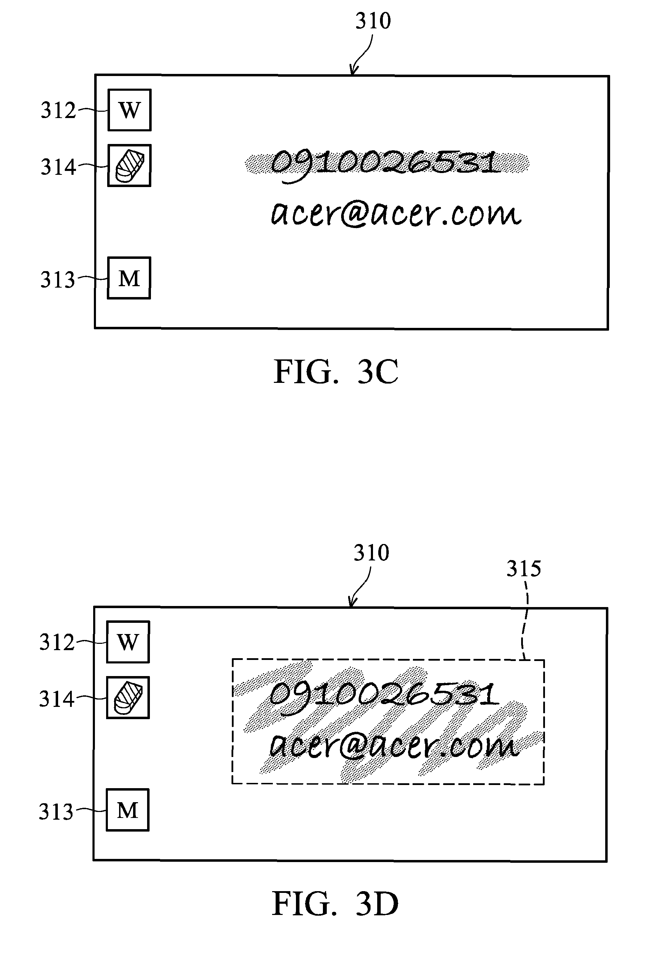

As shown in Fig. 3C, the first touch-moving path input in step S213 is displayed as line segments drawn by a ballpoint pen (i.e., opaque thin lines), and the second touch-moving path input in step S217 is displayed as line segments drawn by a marker pen or highlighter (i.e., translucent thick lines). A part of the first touch-moving path corresponding to a telephone number is highlighted by the second touch-moving path.

In this example, the second touch-moving path appears as a substantially straight line, which highlights a part of the first touch-moving path with a vivid, translucent color (the color is represented with a shadow in Fig. 3C). The display illustrated in Fig. 3C is taken as an example, rather than a limitation. The second touch-moving path can be made in any suitable shape in order to efficiently highlight different parts of the first touch-moving path.

For example, when the whole body of the first touch-moving path is to be highlighted, the second touch-moving path can be made in a shape as shown in Fig. 3D. In the Fig. 3D, the first touch-moving path corresponding to both the telephone number and the e-mail address is highlighted.

In step S207, in response to the highlighted parts of the first touch-moving path, the electronic device determines a target area for performing the recognition process.

The target area can be determined by the area covered by the second touch-moving path. For example, in Fig. 3C, most of the first touch-moving path corresponding to the telephone number (i.e., the upper line of the first touch-moving path) is covered by the second touch-moving path. It is thus determined that the upper line of the first touch-moving path (i.e., the part corresponding to the telephone number) is the target area for performing the recognition process.

Using Fig. 3D as another example, the upper line and the lower line of the first touch-moving path are highlighted. In this case, an area is determined by the second touch-moving path. For example, a rectangular area is determined by the second touch-moving path, wherein the boundaries of the rectangular area are defined by the farthest point of the second touch-moving path in the up, down, left, and right directions.

In step S209, the highlighted part of the first touch-moving path is recognized in order to extract text information therefrom, and it is determined whether the recognized text information includes particular content in a pre-defined format. The pre-defined format can be a telephone number format, network address format, or electronic mail address for-mat.

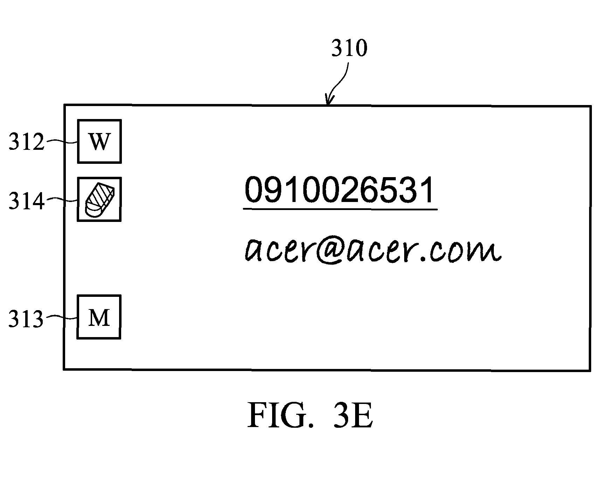

In step S211, the text with pre-defined format is presented as a hyper-link. For example, in Fig. 3E, the part of the first touch-moving path corresponding to the telephone number has been recognized and the corresponding text has been presented as a hyper-link.

In step S213, when the hyper-link text is activated (for example, touched), a corresponding functional menu is provided according to the text format. For example, when the hyper-link text representing a telephone number is activated, the provided function menu comprises the following items: placing a call to the telephone number, storing the telephone number in a contact list, and sending a message to the telephone number.

In step S215, a corresponding function is executed upon selecting one item in the function menu.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method for controlling an electronic device with a touch-sensitive screen and a controller, wherein the method comprises:
receiving, by the touch-sensitive screen, a first touch-moving path on the touch-sensitive screen;
receiving, by the touch-sensitive screen, a second touch-moving path on the touch-sensitive screen, wherein at least a part of the first touch-moving path is highlighted by the second touch-moving path; and
recognizing and storing, by the controller, the highlighted part of the first
touch-moving path.

2. The method of claim 1, further comprising displaying a first virtual button and a second virtual button on the touch-sensitive screen, wherein the first touch-moving path is received in response to activating the first virtual button, and the second touch-moving path is received in response to activating the second virtual button.

3. The method of claim 1 or 2, further comprising providing a stylus, which comprises a tip and a side button, wherein,
when a contact made by the tip is detected on the touch-sensitive screen while the side button is not pressed, the first touch-moving path is received; and
when a contact made by the tip is detected on the touch-sensitive screen while the side button is being pressed, the second touch-moving path is received.

4. The method of any of the preceding claims, wherein the touch-sensitive screen displays the first touch-moving path and the second touch-moving path as line segments with different visual features, wherein the visual features comprise at least one of color, brush stroke style, transparency, and stroke width.

5. The method of any of the preceding claims, further comprising:
recognizing the highlighted part of the first touch-moving path in order to extract text information therefrom;
determining whether the recognized text information comprises particular contents with a pre-defined format;
initiating an action corresponding to the particular contents when the recognized text information comprises particular contents with the particular pre-defined format.

6. An electronic device, comprising:
a touch-sensitive screen, receiving a first touch-moving path and a second touch-moving path on the touch-sensitive screen, wherein at least a part of the first touch-moving path is highlighted by the second touch-moving path; and
a controller, recognizing and storing the highlighted part of the first touch-moving path.

7. The electronic device of claim 6, wherein the touch-sensitive screen is further configured for displaying a first virtual button and a second virtual button thereon, wherein the first touch-moving path is received in response to activating the first virtual button, and the second touch-moving path is received in response to activating the second virtual button.

8. The electronic device of claim 6 or 7, further comprising a stylus, which comprises a tip and a side button, wherein,
when a contact made by the tip is detected on the touch-sensitive screen while the side button is not pressed, the first touch-moving path is received; and
when the contact made by the tip is detected on the touch-sensitive screen while the side button is being pressed, the second touch-moving path is received.

9. The electronic device of any of claims 6 to 8, wherein the touch-sensitive screen is configured for displaying the first touch-moving path and the second touch-moving path as line segments with different visual features, wherein the visual features comprise at least one of ink color, brush stroke, transparency, and stroke width.

10. The electronic device of any of claims 6 to 9, wherein the controller is further configured for performing the steps of:
recognizing the highlighted part of the first touch-moving path in order to extract text information therefrom;
determining whether the recognized text information comprises particular contents with a pre-defined format;
initiating an action corresponding to the particular contents when the recognized text information comprises particular contents with the pre-defined particular format.
